# EUROPÄISCHE PATENTANMELDUNG

(11) **EP 4 186 626 A1**
(43) Veröffentlichungstag der Anmeldung: **31.05.2023**
(21) Anmeldenummer: 22207335.5
(22) Anmeldetag: 14.11.2022
(51) Int. Cl.: B23D 79/00, B23K 5/00, B23K 7/00, C10L 3/00, C10L 3/02

(54) **VERFAHREN ZUR AUTOGENEN BEARBEITUNG VON METALLEN**

(30) Priorität: 30.11.2021 DE 102021005905
(71) Anmelder: Messer SE & Co. KGaA, 65812 Bad Soden (DE)
(72) Erfinder: Hildebrandt, Bernd, 47918 Tönisvorst (DE)
(74) Vertreter: Münzel, Joachim R.

(57) **Zusammenfassung**

Ein Verfahren zur autogenen Bearbeitung von Metallen, bei dem ein Wasserstoff als Brenngas aus einer Brenngasquelle und Sauerstoff als Oxidationsmittel aus einer Oxidationsmittelquelle an einem Bearbeitungswerkzeug zusammengeführt werden und vor einer Mündungsöffnung des Bearbeitungswerkzeugs eine zur Bearbeitung eines Werkstücks eingesetzte Flamme erzeugt wird, , ist erfindungsgemäß dadurch gekennzeichnet, dass dem Brenngas ein brennbares Zusatzgas beigemischt wird, die mit Sauerstoff in einer leuchtenden Flamme verbrennt. Als Zusatzgas werden dem Wasserstoff beispielsweise Spuren eines Phosphor- oder Schwefelhaltigen Gases, oder ein kohlenwasserstoffhaltiges Gas beigemischt.

## Beschreibung

Die Erfindung betrifft ein Verfahren zur autogenen Bearbeitung von Metallen, bei dem ein Brenngas aus einer Brenngasquelle und ein Oxidationsmittel aus einer Oxidationsmittelquelle an einem Bearbeitungswerkzeug zusammengeführt und miteinander zur Reaktion gebracht werden, wobei vor einer Mündungsöffnung des Bearbeitungswerkzeugs eine zur autogenen Bearbeitung eines Werkstücks eingesetzte Flamme erzeugt wird.

Zum autogenen Bearbeitung von Metallen, wie beispielsweise Brennschneiden, Flammrichten, Fugenhobeln oder Autogenschweißen kommen heute überwiegend auf Kohlenwasserstoffen basierende Brenngase wie Propan, Acetylen, Propen, Ethen usw. zum Einsatz, wie beispielsweise in der DE 2 823 305 A1 beschrieben. Auf Grund der bei der Verbrennung dieser Gase entstehenden Kohlendioxidemission werden in naher Zukunft durch bereits jetzt in Vorbereitung befindliche Gesetzesregelungen genau diese Brenngase und Brenngasgemische mit einer CO₂ - Steuer belegt werden. Unabhängig vom Kostenaspekt hat die Vermeidung von klimaschädlichem Kohlendioxid sowie andern Emissionen, wie beispielsweise Kohlenmonoxid oder Mikro-Partikel (Kohlenstoff), die als Reaktionsprodukte der Verbrennung entstehen, einen hohen Stellenwert zur Erhöhung der Arbeitssicherheit und des Umweltschutzes.

An Stelle kohlenstoffbasierter Brenngase bietet sich der schon seit über 100 Jahren auch als Brenngas in der Autogentechnik bekannte Wasserstoff als Alternative an. In der Autogentechnik ist die Verwendung von Wasserstoff als Brenngas jedoch mit dem Nachteil verknüpft, dass er mit Sauerstoff in einer bläulichen, transparenten Flamme verbrennt, die insbesondere im helleren Umfeld fast nicht sichtbar ist. Die damit einhergehende schlechte Beobachtbarkeit der Flamme erschwert oder verhindert eine saubere Einstellung des Primärflammenkegels sowie das Handling beim Einhalten eines definierten Abstandes zwischen dem oder den Flammenkegeln und der Oberfläche eines zu bearbeitenden Werkstücks. Die Einstellung eines optimalen Brenngas-Sauerstoffgemisches ist unter diesem Aspekt visuell nur schwer durchführbar oder gar unmöglich. Für manuelle Arbeiten ist ein zufriedenstellender Einsatz von Wasserstoff als Brenngas aus diesen Gründen nur in Ausnahmefällen möglich. Im automatisierten Betrieb könnte man sich einer geeigneten Regeltechnik mittels Durchflussmessern o.ä. bedienen, jedoch erfordert dies einen zusätzlichen apparativen Aufwand, der wiederum die Fehleranfälligkeit erhöht.

Aufgabe der vorliegenden Erfindung ist es daher, eine Möglichkeit zum Einsatz von Wasserstoff als Brenngas in der Autogentechnik zu schaffen, die die vorgenannten Nachteile überwindet.

Gelöst wird diese Aufgabe mit einem Verfahren nach Patentanspruch 1 sowie mit einem Brenngas nach Anspruch 8 oder 9. Vorteilhafte Ausgestaltungen der Erfindung werden in den Unteransprüchen beansprucht.

Gemäß der Erfindung wird dem als eigentliches Brenngas für die autogene Bearbeitung eingesetzten Wasserstoff vor der Erzeugung der Flamme ein Zusatzgas beigemischt. Das Zusatzgas ist gleichfalls brennbar und verbrennt mit Sauerstoff in einer im sichtbaren Spektralbereich gut wahrnehmbaren Flamme. Die von dem mit dem Wasserstoff durchmischten Zusatzgas ausgelösten Verbrennungsvorgänge führen zu einer guten Wahrnehmbarkeit der insgesamt entstehenden Flamme. Die für die autogene Bearbeitung wichtigen Parameter, wie beispielsweise die Flammentemperatur, Zündgeschwindigkeit oder Flammenleistung werden durch das Zusatzgas nicht oder nur unwesentlich oder sogar positiv beeinflusst. Dies wird beispielsweise dadurch gewährleistet, dass als Zusatzgas entweder ein selbst gut brennbares Gas, wie etwa Acetylen, zum Einsatz kommt oder das Zusatzgas nur in einer geringen, die Verbrennung des Wasserstoffs nicht oder nur unerheblich beeinflussenden Menge beigemischt wird. Die vorgenannten Nachteile bei der Verwendung von reinem Wasserstoff als Brenngas können dadurch überwunden werden.

Als "Wasserstoff" soll hier ein Gas mit einem Wasserstoffanteil von mindestens 99,5 Vol.-%, bevorzugt von mindestens 99,99 Vol.-% verstanden werden.

Als Oxidationsmittel kommt erfindungsgemäß ein sauerstoffhaltiges Gas, bevorzugt ein Gas mit einem Sauerstoffanteil von über 99 Vol.-%, besonders bevorzugt mit einem Sauerstoffanteil von über 99,9 Vol.-% zum Einsatz.

Als Brenngasquelle kommt im Rahmen der Erfindung eine zur autogenen Bearbeitung übliche Brenngasquelle zum Einsatz, beispielsweise eine Druckgasflasche oder ein Druckgasflaschenbündel. Als Oxidationsmittelquelle kommt insbesondere eine zur autogenen Bearbeitung übliche Oxidationsmittelquelle zum Einsatz, beispielsweise ebenfalls eine Druckgasflasche, ein Druckgasflaschenbündel oder ein Tank.

Als Bearbeitungswerkzeug findet erfindungsgemäß ein übliches Werkzeug für die autogene Bearbeitung Verwendung, beispielsweise eine Autogen-Brennschneidmaschine, eine Einrichtung zum Flammspritzen, eine Einrichtung zum Fugenhobeln oder ein Autogen-Schweißgerät. Das erfindungsgemäße Verfahren eignet sich somit insbesondere für alle eingangs genannten autogenen Bearbeitungsverfahren.

Entscheidend für die Erfindung ist eine gute Durchmischung des Wasserstoffs mit dem Zusatzgas. Daher sieht eine vorteilhafte Ausgestaltung der Erfindung vor, dass das Zusatzgas bereits als ein mit dem Wasserstoff gemischtes Gasgemisch in der Brenngasquelle vorliegt. Beispielsweise wird das Zusatzgas dazu bei der Abfüllung des als Brenngasquelle eingesetzten Flaschengebindes (Druckgasflasche oder Druckgasflaschenbündel) als Beimengung in den Wasserstoff eingebracht und steht somit fertig vorgemischt in der Brennstoffquelle für die autogene Bearbeitung zur Verfügung.

Alternativ oder ergänzend zur vorstehenden Verfahrensführung wird das Zusatzgas erst während der autogenen Bearbeitung in einer die Brenngasquelle mit dem Bearbeitungswerkzeug verbindenden Brenngaszuleitung in den Wasserstoff eingebracht. Beispielsweise erfolgt die Zuführung des Zusatzgases an einer geeigneten in der Zuleitung angeordneten Mischarmatur stromab zu einem Absperrventil eines als Brenngasquelle eingesetzten, mit Wasserstoff gefüllten Flaschengebindes oder Tanks, jedoch stromauf zum Bearbeitungswerkzeug. Die Vermischung von Wasserstoff und Zusatzgas erfolgt in diesem Fall erst unmittelbar vor dem und/oder im Bearbeitungswerkzeug, jedoch vor der Erzeugung der Flamme.

Als bevorzugtes Zusatzgas kommt beispielsweise eine Phosphorverbindung, bevorzugt eine gasförmige Phosphor-Wasserstoff-Verbindung wie PH₃, oder eine gasförmige Schwefelverbindung, wie Schwefelwasserstoff (H₂S) zum Einsatz. Diese Zusatzgase führen als Beimengung zum Wasserstoff zu einer leuchtend gelben Gesamtflamme.

Jedoch ist bei Verwendung von Phosphor- oder Schwefelverbindungen wie PH₃ oder H₂S oder anderer, potenziell gesundheitsgefährdender Gase als Zusatzgas darauf zu achten, dass keine Gefährdungen für Mensch und Umwelt eintreten können und insbesondere auch die entsprechenden gesetzlichen Vorgaben eingehalten werden. Bevorzugt beträgt die Beimengung des Zusatzgases im Volumen bzw. dem Volumenstrom des Wasserstoffs daher nicht mehr als 50 vpm, bevorzugt zwischen 10 vpm und 50 vpm. Eine derart geringe Dotierung genügt immer noch zur Erzeugung einer gut sichtbaren Flamme. Die Beimengung kann dabei, wie oben beschrieben, in der Abfüllung der Brenngasquelle, also insbesondere des Flaschengebindes, erfolgen und somit einem Benutzer bereits vor Beginn der autogenen Bearbeitung als fertiges Gemisch zur Verfügung stehen, oder die Beimischung erfolgt erst während der Durchführung der autogenen Bearbeitung, etwa durch Einspeisen des Zusatzgases in eine die Brenngasquelle mit dem Bearbeitungswerkzeug verbindenden Brenngaszuleitung.

Alternativ oder ergänzend zur Verwendung eines vorgenannten, Phosphor oder Schwefel enthaltenden Zusatzgases kommt in einer anderen zweckmäßigen Ausgestaltung der Erfindung als Zusatzgas ein kohlenwasserstoffhaltiges Gas, wie Acetylen, Propan oder Erdgas, zum Einsatz. Das auf diese Weise zum Einsatz kommende Brenngas weist einen Volumenanteil des kohlenwasserstoffhaltigen Zusatzgases zwischen 5 Vol.-% und 50 Vol.-%, Rest Wasserstoff auf. Bevorzugt liegt der Volumenanteil des kohlenwasserstoffhaltigen Zusatzgases dabei unter 30 Vol.-%, besonders bevorzugt unter 20 Vol.-%. Bei dieser Ausgestaltung wird die Entstehung von Kohlendioxid als Reaktionsprodukt gegenüber der Verwendung derzeit üblicher, kohlenwasserstoffhaltiger Brenngase zwar nicht völlig vermieden, jedoch zumindest deutlich reduziert.

Die Aufgabe der Erfindung wird auch durch die Verwendung eines aus Wasserstoff und einem Zusatzgas bestehenden Brenngases zum autogenen Bearbeitung von Metallen gelöst, das aus Wasserstoff mit einer Reinheit von mindestens 99,5 Vol.-%, bevorzugt mindestens 99,99 Vol.-% besteht und als Zusatzgas Beimengungen von gasförmigen Phosphor- und/oder Schwefelverbindungen in einem Anteil zwischen 10 und 50 vpm enthält. Insbesondere handelt es sich bei den Beimengungen um PH₃ oder um H₂S.

Ein alternatives, zur Durchführung der Erfindung geeignetes Brenngas besteht aus einem kohlenwasserstoffhaltigen Zusatzgas mit einem Anteil zwischen 5 Vol.-% und 50 Vol.-%, bevorzugt zwischen 5 Vol.-% und 30 Vol.-%, Rest Wasserstoff.

Das erfindungsgemäße Verfahren und die erfindungsgemäßen Brenngase sind für alle bekannten autogenen Bearbeitungsverfahren geeignet, beispielsweise zum Autogenschweißen, Brennschneiden, Flammrichten oder Fugenhobeln. Darüber hinaus können alle üblicherweise mit Autogentechnik bearbeitbare Werkstoffe bearbeitet werden, insbesondere un- oder niedrig legierte Stähle oder Aluminiumwerkstoffe. Insbesondere eignet sich das erfindungsgemäße Verfahren für das Brennschneiden von un- oder niedrig legierten Stählen, insbesondere von solchen mit einer Blechdicke von über 10 mm.

## Patentansprüche

1. Verfahren zur autogenen Bearbeitung von Metallen, bei dem ein Brenngas aus einer Brenngasquelle und ein Oxidationsmittel aus einer Oxidationsmittelquelle an einem Bearbeitungswerkzeug zusammengeführt und miteinander zur Reaktion gebracht werden, wobei vor einer Mündungsöffnung des Bearbeitungswerkzeugs eine zur autogenen Bearbeitung eines Werkstücks eingesetzte Flamme erzeugt wird,
**dadurch gekennzeichnet,**
**dass** als Brenngas Wasserstoff zum Einsatz kommt, dem vor der Erzeugung der Flamme ein mit Sauerstoff in einer sichtbaren Flamme verbrennendes Zusatzgas beigemischt wird.

2. Verfahren nach Anspruch 1, **dadurch gekennzeichnet, dass** das Zusatzgas dem Wasserstoff in der Brenngasquelle beigemischt wird.

3. Verfahren nach Anspruch 1 oder 2, **dadurch gekennzeichnet, dass** das Zusatzgas dem Wasserstoff während der autogenen Bearbeitung des Werkstücks in einer die Brenngasquelle mit dem Bearbeitungswerkzeug verbindenden Brenngaszuleitung beigemischt wird.

4. Verfahren nach einem der vorhergehenden Ansprüche, **dadurch gekennzeichnet, dass** als Zusatzgas eine gasförmige Phosphor- oder Schwefelverbindung, wie Phosphin oder Schwefelwasserstoff, zum Einsatz kommt.

5. Verfahren nach Anspruch 4, **dadurch gekennzeichnet, dass** die als Zusatzgas eingesetzte Phospor- oder Schwefelverbindung in einem Mengenanteil von 10 vpm bis 50 vpm dem Wasserstoff beigemischt wird.

6. Verfahren nach einem der vorhergehenden Ansprüche, **dadurch gekennzeichnet, dass** als Zusatzgas ein kohlenwasserstoffhaltiges Gas, wie Acetylen, Propan oder Erdgas, zum Einsatz kommt.

7. Verfahren nach einem der vorhergehenden Ansprüche, **dadurch gekennzeichnet, dass** die autogene Bearbeitung des Werkstücks in Schweißen, Brennschneiden, Flammrichten oder Fugenhobeln besteht.

8. Brenngas zur autogenen Bearbeitung von Metallen, mit einem Wasserstoffanteil von mindestens 99,5 Vol.-% und Beimengungen von gasförmigen Phosphor- oder Schwefelverbindungen in einem Anteil zwischen 10 und 50 vpm.

9. Brenngas zur autogenen Bearbeitung von Metallen, mit einem Wasserstoffanteil von mindestens 99,9 Vol.-% und Beimengungen eines kohlenwasserstoffhaltigen Gases in einem Anteil zwischen 5 Vol.-% und 50 Vol.-%.
